# EUROPEAN PATENT APPLICATION

(11) **EP 3 919 369 A1**
(43) Date of publication of application: **08.12.2021**
(21) Application number: 19912382.9
(22) Date of filing: 22.11.2019
(51) Int. Cl.: B63J 1/00, C02F 1/44, B01D 61/10

(54) **VESSEL FOR DESALINATING SALT WATER, CONVERTING SAME INTO DRINKING WATER AND GENERATING ELECTRICAL ENERGY**

(30) Priority: 29.01.2019 ES 201900093 U; 16.10.2019 ES 201900494 U
(71) Applicant: López Palancar, Luis, 30203 Cartagena (ES); López Maestre, Tomas, 28224 Pozuelo de Alarcón (ES)
(72) Inventor: López Palancar, Luis, 30203 Cartagena (ES); López Maestre, Tomas, 28224 Pozuelo de Alarcón (ES)
(74) Representative: Díaz Pacheco, Maria Desamparados
(86) International application number: PCT/ES2019/070801
(87) International publication number: WO 2020/157346

(57) **Abstract**

The present invention refers to Imipramine for use as inhibitor of fascin1 overexpression, preferably said overexpression of fascin1 is associated to cancer, and more preferably to colorectal cancer.lt also refers to a method for the treatment of cancer mediated by fascin1 comprising administering to a subject in need thereof an effective amount of imipramine, and more preferably to colorectal cancer.

## Description

### TECHNICAL FIELD

The present patent is comprised in the technical sector for the production of water from seawater and the production of electrical energy on the same vessel by means of the use of marine power plants.

### BACKGROUND OF THE INVENTION

Drinking water is a scarce commodity in some areas and regions on Earth. 97% of the water existing on Earth is salt water, with only 3% being fresh water and 1% of that being found in liquid state, with the remaining 2% being in solid state in the form of ice in latitudes close to the poles.

At present, drinking water is produced from seawater in land-based desalination plants, generally by reverse osmosis, the systems of which are supplied with electricity coming from either the power grid or else from electrical power supplies installed in the same plant, with or without the input of heat energy produced with fossil fuels, with the problems inherent to same.

The production of electrical energy entails difficulties in certain areas of the planet, combined with the environmental pollution resulting from exhaust gases and residual products ejected by electricity generating units, virtually all of which are driven by low-speed diesel motors (N < 400 rpm)

Basically, electrical energy is usually produced in land-based plants or on moored off-shore platforms with anchorings at a fixed point of the sea bed. These plants are supplied with fossil fuels, with gas, by means of waterfalls, or with non-conventional alternative means such as wind or photovoltaic energy.

There are land-based or stationary off-shore generation plants with high electrical energy production yields which, however, given the very nature of their installation in a fixed point, both on land and at sea, prevent the transfer from said power plants to other points with electrical energy needs.

Moreover, high construction and operating costs of the infrastructures needed in stationary land-based or off-shore plants, both for desalination/drinking-water treatment and for power generation, must be considered.

All the vessels have installed therein a distillation/drinking-water treatment plant and a power plant for providing fresh water and electricity to both their equipment and to the various services on the vessel.

Reverse osmosis plants, which date back to the 19^{th} century, have achieved a high degree of perfection, and the same can be said of alternators, which also date back to the 19^{th} century and currently reach electrical energy generation yields of over 96%.

Based on the foregoing, this patent relating to a vessel for desalination/drinking-water treatment intends to meet the two basic needs for life, that is, the need for drinking water and for electrical energy, by combining the production and the transport of both.

Additionally, the systems needed for powering the osmosis plants and propelling the vessel are made up of marine power plants driven by internal combustion machines which have a number of advantages, inherent to virtually all propulsion and auxiliary motors installed in vessels since the IMO Tier III standard became effective, and they are also driven by PEMFC and MCFC type (used in military and in other civilian applications) fuel cells (or *Brennstoffzellen*), and even a combination of these elements.

Due to their size and their high rotational speed, high-speed generation units (n ≥ 1,000 rpm) have the advantage of having very low emissions levels, particularly when the exhaust gases are subsequently treated. Moreover, airborne and structural noise levels are also very low given the special mounting on elastic elements. Lastly, they have the additional advantage of having a plurality of units on board, favouring redundancy and, therefore, safety.

High-speed gas motors, which have been known since the time the ignition motor was invented, are living a new era. Gas propulsion motors, with a speed exceeding 1,000 rpm, have the advantage of a drastic reduction in emissions levels, the use of gas which have various methane numbers, and very low airborne and structural noise levels.

Hydrogen motors have been used in trucks and buses for over 20 years, particularly those produced by the company *MAN Nutzfahrzeuge,* with optimal results with respect to levels of pollutants and airborne and structural noises. The only problem lies in the storage of hydrogen which, for now, is performed by means of double-shell tanks, with nitrogen between both shells, or by means of metal hydride tanks, with problems consisting of, on one hand, their high price and on the other hand, their small volume for storing inert hydrogen (only 2% of the volume of the tank). Despite the foregoing, hydrogen motors of up to 5,000 kW are being developed and will soon be launched. At present, several automobile companies are experimenting with metal tanks coated with an anti-porous synthetic material that prevents hydrogen leakages and allow storing hydrogen at pressures of up to 600 bar.

Medium- or high-speed dual-fuel motors (n ≥ 500 rpm) currently have the advantage that the pilot fuel used for igniting the gas is very pure diesel, which eliminates sulphur emissions, and with the post-treatment of exhaust gases extremely low emissions levels are achieved.

Gas turbines, which are widely used in the military naval sector, have always had the drawback of their high emissions levels, particularly high in NOₓ, SOₓ, and their high airborne and structural noise levels. Nevertheless, very positive results are currently being achieved by means of water injection, selective catalytic reduction (SCR), and flame temperature control. The use of sulphur-free fuels, such as JP 5, JP 7, or natural gas eliminates the risk of SOₓ emissions formation, and the systems indicated above drastically reduce NOₓ emissions. In turn, the acoustic encapsulation of these machines and the simple or double elastic support reduce airborne and structural noise levels to minimum levels.

Finally, two-stroke motors operating with natural gas (NG) entirely eliminate the risk of SOₓ emissions formation, insofar as the post-treatment of exhaust gases favours emissions levels which comply with the IMO Tier III standard, with a high power being obtained.

Fuel cells present, first, the advantage of being completely soundless and devoid of vibration during operation, so noise pollution is nil. Moreover, fuel cells are electrochemical energy converters which extract the energy stored in a carrier element (hydrogen) obtained from various types of chemical substances and fossil fuels and synthetic fuels, and upon combining this energy carrying element with oxygen from the air, they give rise to the reaction opposite to electrolysis, producing electrical energy in the form of direct current.

Up until now, fuel cells, which were invented in 1839-1842 by Sir William Grove, and developed for the space race under the US project called *"Gemini",* have never been used in surface vessels for propelling same or for obtaining drinking water from seawater.

Taking the described background and current state of the art into account, a system for producing drinking water in which energy can be produced from clean sources, with CO/CO₂ emission levels in the range comprised between 5% and 10% of traditional levels and prevents polluting water, eliminating any risk for flora and fauna, particularly on the coasts, which would result in a cleaning of the marine environment in coastal areas having a high natural value, is highly desirable.

This patent proposes the construction of a vessel for desalination/drinking-water treatment, comprising a system for collecting seawater, a system of reverse osmosis for desalination, a system for unloading the concentrate, transferring the filtrate, a source for producing energy, and a system for control. As a source for producing energy, marine generation units powered with natural gas, in the different modalities thereof, fuel cells (FCs) operating with natural gas in the different alternatives thereof, alone or in combined installations, are contemplated.

Utility model U200201740 can be considered the prior art, with the exceptions that said utility model relates to a stationary plant, uses only diesel motors for the generation units, and is a land-based plant.

### DISCLOSURE OF THE INVENTION

The present invention relates to a mobile, floating, and self-driven plant in which the generation plants can be different from diesel motors and in which, given that it is a floating plant, salt water can be collected from very deep levels, thereby providing a solution to the collection of marine microorganisms and matter that reduce the efficiency of desalination membranes.

It consists of a vessel for desalination/drinking-water treatment having a variable length, 20 ≤ L ≤ 400 meters (15), depending on the amount of water and electrical energy required, travelling across all the oceans, with sufficient capacity to provide drinking water and electricity to areas deficient in and lacking these commodities, or to populations of a certain size, with a large cost reduction with respect to land-based or stationary off-shore plants, and preventing pollution due to brine in coastal areas as a result of being dumped and having an effect on sea currents, which can reduce and even decimate flora and fauna.

The vessel (15) has on-board laboratories for performing physicochemical analyses of both the incoming salt water and of the outgoing product water and reject water (brine) for the purpose of performing drinking-water treatment on the product water at the same time directly on the platform, taking into account World Health Organization guidelines.

As for the generation of electrical energy and its transport to land, a single configuration is adopted in the vessel. The electrical energy produced on board is transported to the land-based power grid (22) by means of underwater cables (21).

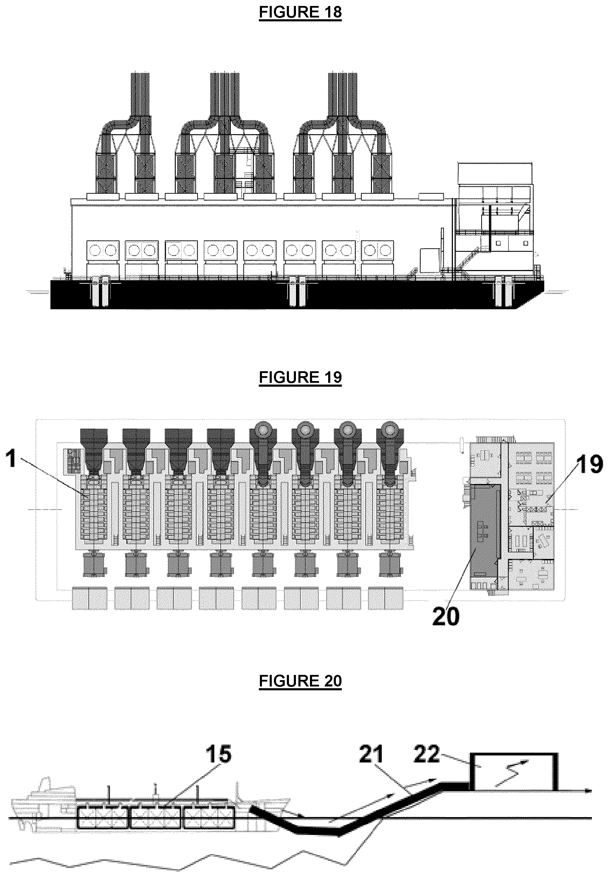

The use of wind-powered generators on vessels or off-shore platforms (Figure 18 and Figure 19) presents stability difficulties due to the high location of the centre of gravity of the generators, which has given rise to farms with wind generators anchored to the sea bed.

The present invention relates to a system for desalination/drinking-water treatment of salt water in a vessel (15) using as the energy source for reverse osmosis plants (2) the energy produced by marine power plants, at 400 V - 11kV/50Hz or 440V - 11 kV/60 Hz, driven according to the following alternatives:
- high-speed diesel motors (n ≥ 1000 rpm)
- high-speed gas motors (n ≥1,000 rpm) (LNG, NG, LPG, GLP, CH₄)
- high-speed motors (n ≥ 1,500 rpm) powered by hydrogen (H₂)
- medium- or high-speed dual-fuel motors (n ≥ 500 rpm) powered with LNG, NG, LPG, GLP, CH₄
- gas turbines powered with LNG, NG, LPG, GLP, CH₄
- two-stroke gas motors (NG).
- low-temperature fuel cells (PEMFC, AFC, PAFC) powered with natural gas in the different variants thereof (LNG, NG, LPG, GLP, CH₄)
- medium- and high-temperature fuel cells (MCFC and SOFC) powered by natural gas in the different variants thereof (LNG, NG, LPG, GLP, CH₄)
- Low-temperature fuel cells (PEMFC, AFC, PAFC) and medium-temperature fuel cells (MCFC) powered by hydrogen (H₂)

In general, the vessel (15) for producing drinking water can have two configurations for transferring water to port or to a destination point. A first configuration for producing drinking water with on-board storage (7) and an electrically driven pumping station driving the water by direct transfer to the destination point, and a second configuration for producing drinking water where said water is transported by means of a tanker vessel or shuttle (23), by means of floating tanks and towed from land by a system of windlasses, or by direct transfer by means of floating pipe (14) or pipe on the sea bed (17), and, moreover, as an electricity generating plant it can transfer to land, with the on-board means described, the electrical production remaining from the electricity needed for the desalination/drinking-water treatment and operation of all the units and services of the platform/vessel.

The on-board system for generating electrical energy is established in the vessel project according to the shipbuilder and according to the consideration of the ease of purchase and use of the fuels existing in the operating area of the platform or of the vessel and the costs thereof.

This system provides the following advantages:
- Considerable reduction of costs with respect to the costs of the infrastructures needed for desalination/drinking-water treatment facilities and land-based or stationary (off-shore) electrical energy production facilities.
- The possibility of collecting salt water at a variable temperature and depth where there is no light, thereby eliminating the collection of marine microorganisms and matter that may reduce the efficiency of desalination membranes.
- Since the facilities of the vessel are modular, a possible malfunction or the time it takes for performing maintenance on of one of the modules, does not detract from the operation where drinking water and electrical energy are continuously being produced.
- Minimum pollution by airborne and structural noise.
- Since the system is modular and scalable, it can be installed in vessels having lengths comprised between 20 and 400 meters and can thereby meet the different needs of possible shipbuilders, or of populations having a varying number of inhabitants.
- Since it is a vessel, auxiliary boats or vessels for transporting from the off-shore platform to the desired location and the operating costs thereof are eliminated.
- In the event that it is necessary to use vessels of a certain size and long length, the transformation and recycling of oil tankers that do not comply with MARPOL maritime requirements and with the IMO for double hulls, which involves cleaning and decontaminating tanks, installing the missing necessary units, fuel cells, and reverse osmosis plants, saving in costs of building a new vessel and having a shorter delivery time.
- Possibility of producing 145 MW of electrical power and a volume of more than 1 million m³ of drinking water a day .

Marine generation units (1) operating with MDO (marine diesel oil) at a high speed comply with IMO Tier III, US EPA Tier 4, CCNR II, IMO II, and IMO III standards with respect to the strictest requirements concerning NOₓ and CO₂ emissions.

Marine generation units with motors using LNG, with NOₓ emissions equivalent to 10% of normal emissions in low-speed diesel motors; CO₂ emissions that are 75% of the normal emissions also in these low-speed diesel motors; zero SOₓ emissions; and only 2% of the particle emissions in these same diesel motors will soon be available as well. The fuel cell (FC) emissions can be considered negligible.

The heat dissipated in the exhaust gases of these units and fuel cells (FC) themselves is utilised by means of an auxiliary drinking-water treatment plant (5) and distillation plant (6), and part of the generated electricity is taken to the transformers and distribution panels of the platform so that it can be distributed to all the systems, units, and services of the platform.

Given that high-temperature fuel cells (SOFC) require a long pre-heating period and the dissipated heat is excessive, the present model is focused on low-temperature fuel cells (PEMFC), alkaline fuel cells (AFC), phosphoric acid fuel cells (PAFC), and medium-temperature fuel cells (MCFC), though without ruling out the former.

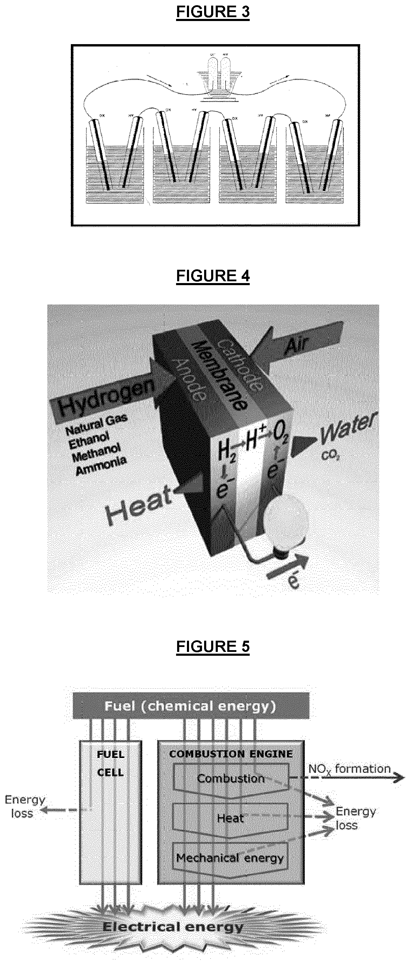

An operating diagram of one of the fuel cells that can be used in the present invention is attached (Figure 4). In general, a fuel cell is an electrochemical energy conversion device similar to a battery but differing from same in that it is designed to allow the continuous replenishment of the reagents consumed; i.e., it produces electricity from an external fuel and oxygen source in contrast with the limited energy storage capacity of a battery. Furthermore, the electrodes in a battery react and change according to whether it is charged or uncharged; in contrast, in a fuel cell the electrodes are catalytic and relatively stable.

The typical reagents used in a fuel cell are hydrogen on the anode side and oxygen in the cathode side (if it is a hydrogen cell). Moreover, conventional batteries consume solid reagents, and once these reagents are depleted, they must be removed or recharged with electricity. Generally, the reagents "flow in" and the reaction products "flow out". Virtually continuous long-term operation is feasible as long as these flows are maintained.

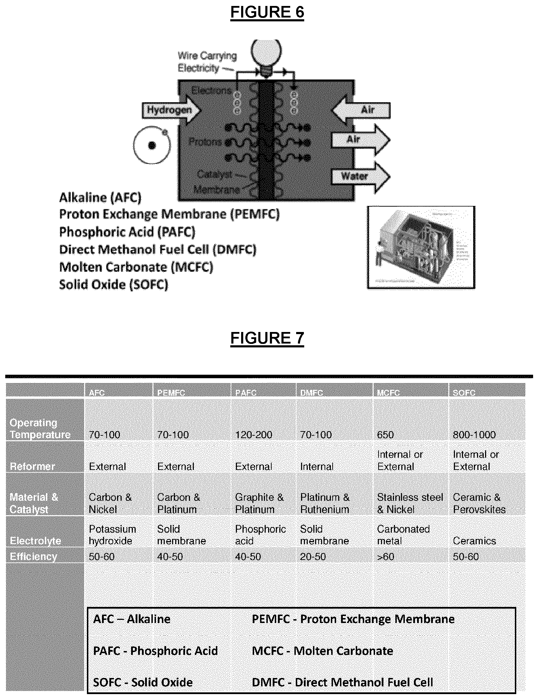

Another attached figure shows a diagram of a typical example of a fuel cell (Figure 6) of the Proton Exchange Membrane Fuel Cell (PEMFC) (or polymer electrolyte) type, which is a proton-conducting polymer (the electrolyte) that separates the anode side from the cathode side.

On the anode side, the hydrogen reaching the catalysing anode dissociates into protons and electrons. The protons are conducted through the membrane to the cathode, but the electrons are forced to travel through an external circuit (producing energy) since the membrane is electrically insulated. In the cathode catalyst, oxygen molecules react with the electrons (conducted through the external circuit) and protons to form water.

In this example, the only waste is water vapour or liquid water. It should be mentioned that for the protons to be able to go through the membrane, the membrane must be duly moistened given that proton conductivity of polymer membranes used in cells of this type depends on membrane moisture. Therefore, it is common to humidify the gases as they enter the fuel cell.

In addition to pure hydrogen, there is also the hydrogen contained in other fuel molecules including natural gas in the different variants thereof (LNG, NG, LPG, GLP, CH₄), hydrogen itself, duly stored and inertised, and chemical hydrides, the waste produced by fuels of this type; in addition to water, there is a minimum amount of carbon dioxide that is much lower than that produced by an automobile. Compared with a traditional system, fuel cells reduce harmful NOₓ emissions by 180 tonnes (an amount equivalent to the yearly emissions of 22,000 automobiles).

Fuel cells exhibit CO₂ emissions of up to 50% lower than those of diesel and Otto cycle motors, and an optimal energy output (up to 60%) compared with traditional and conventional power generation plants.

### BRIEF DESCRIPTION OF THE DRAWINGS

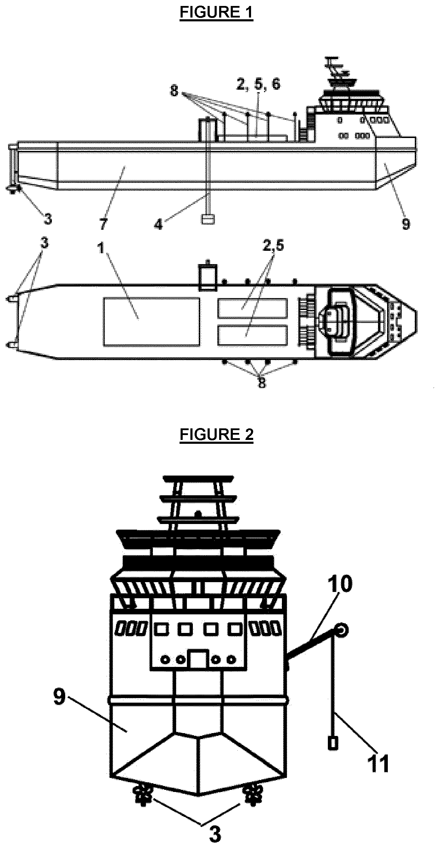

- Figure 1:: Elevational plan view of a vessel for desalination/drinking-water treatment and for producing electrical energy. (1) Electrical energy production plant with marine generation units, fuel cells, or a combination of both. (2) Reverse osmosis desalinating plant. (3) Electric azipod propulsion units. (4) Telescopic tube for collecting salt water. (5) Drinking-water treatment plant. (6) Distillation plant. (7) Desalinated and treated drinking water tanks. (8) Brine diffusers in the sea. (9) Bow thrusters.
- Figure 2:: Section view of the bow of the vessel for desalination/drinking-water treatment and for producing electrical energy. (3) Propellers of the azipod propulsion system. (9) Bow thrusters. (10) Lars for outlet of the drinking water to land. (11) Drinking water outlet pipe.
- Figure 3:: First fuel cell by Sir William Groove (1842).
- Figure 4:: Normal operation of a fuel cell, regardless the type of cell used.
- Figure 5:: Comparison of the operation of an internal combustion machine and a fuel cell with regard to emissions.
- Figure 6:: Types of fuel cells and operation thereof.
- Figure 7:: Types of fuel cells with outputs, reformers, and operating temperature.

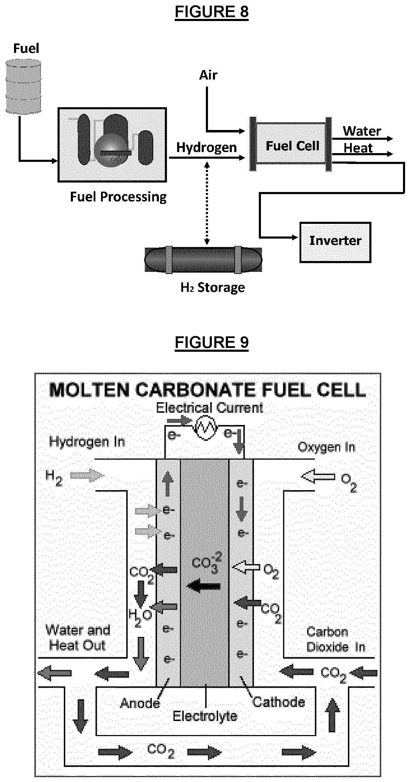

- Figure 8:: General operation of a fuel cell. Need for reformer.
- Figure 9:: Operation of a medium-temperature fuel cell (MCFC).

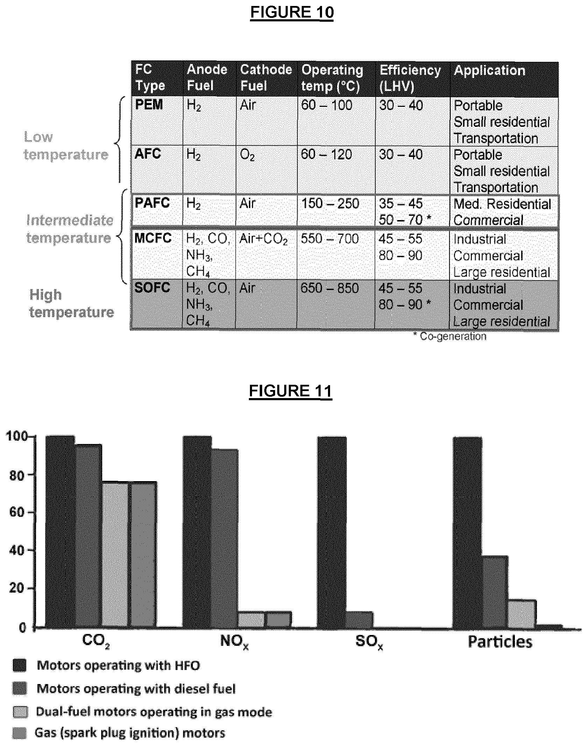

- Figure 10:: Types of fuel cells, with temperatures, outputs, anodes, cathodes, and applications.
- Figure 11:: Exhaust gas emissions levels of different types of internal combustion machines.

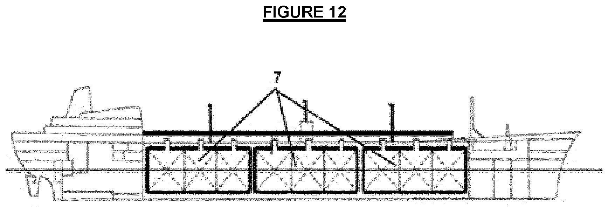

- Figure 12:: Vessel for desalination. (7) Treated drinking water tanks.

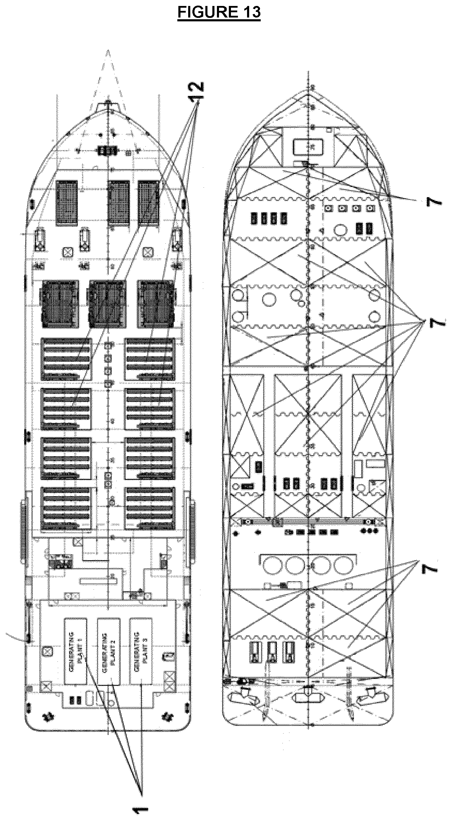

- Figure 13:: Main deck of the vessel for desalination/drinking-water treatment and for producing electrical energy. (1) Electrical energy production plant. (2) System for salt water filtration and pre-filtration. (7) Drinking water tanks.

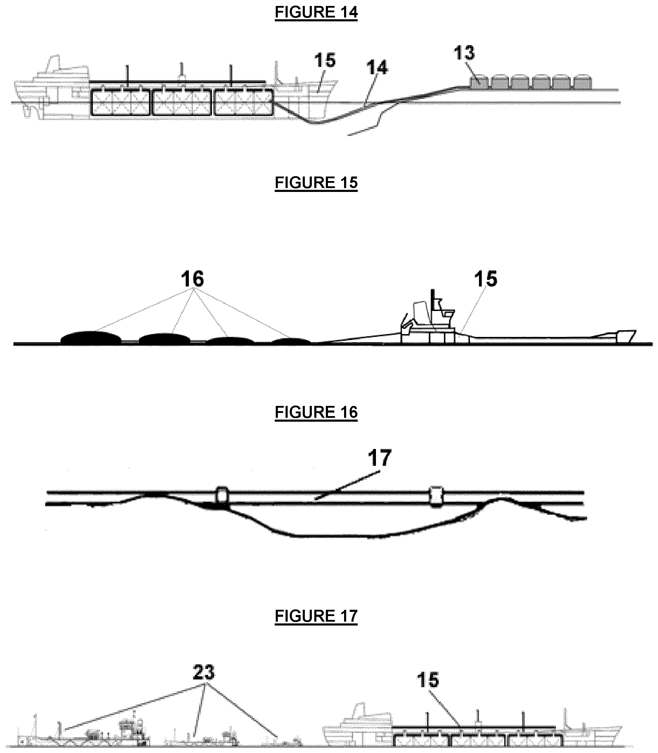

- Figure 14:: System for directly transferring drinking water to land from the vessel. (13) Land-based storage tanks. (14) Drinking water feed pipe. (15) Vessel.
- Figure 15:: System for transferring by means of inflatable flexible tanks. (16) Flexible tanks. (15) Vessel.
- Figure 16:: System for transferring treated drinking water to land by means of an underwater pipe. (17) Underwater fixed pipe.
- Figure 17:: System for transferring treated drinking water to land by means of tanker vessels or shuttles. (15) Vessel for desalination/drinking-water treatment (23) Shuttles or tanker vessels
- Figure 18:: Elevational view of an off-shore platform for producing electrical energy.
- Figure 19:: Plan view of an off-shore platform for producing electrical energy: (1) Power generating plant. (19) Fitting out. (20) Electrical energy control and distribution systems.
- Figure 20:: Electrical power system from the vessel to the land-based grid: (15) Vessel. (22) Land-based power grid or distribution centre. (21) Power cables from the vessel to land.

### PREFERRED EMBODIMENT OF THE INVENTION

The preferred embodiment of the invention relates to a vessel (15), having an approximate length of 50 meters and a drinking water production of 3,000 m³/day by means of two reverse osmosis plants (2), each having a capacity of 1,500 m³/day, with on-board storage and transport to port or destination point, driven by means of electrical motor pump units.

The propulsion of the vessel is electrical, providing on board to that end an ecological source for producing electrical energy with multiple plants (1), because in the event of one of the power production units failing, navigation and salt water desalination with dynamic positioning can continue.

This vessel comprises:
Systems for producing power or means for generating power (1), consisting of a series of high-speed diesel marine generation units; or gas generation units (LNG, NG, LPG, GLP, CH₄); hydrogen generation units (H₂); dual fuel motors; gas turbines; or two-stroke gas motors (NG), including all the current possible systems for producing power; or low- or medium-temperature fuel cells (FC) powered with gas (LNG, NG, LPG, GLP, CH₄); hydrogen (H₂), including all the current possible systems for producing power and configured for supplying power both to the floating platform and to the desalination means and supplying the land-based grid.

Units for water desalination made up of a salt water suction and pumping unit (4) configured for suctioning seawater at a variable depth depending on the characteristics of said water and driving it to the reverse osmosis desalination plant (2) and then to the on-board drinking-water treatment plant.

Pumping units for pumping to the drinking water storage tanks (7); a service for discharging waste brine comprising a brine outlet conduit of variable length for diffusion at a variable depth or configured with diffusers (8) installed on deck and arranged such that they diffuse the brine in a large area, generally with currents; this gives rise to zero concentration of salts compared to those of land-based facilities, which may pollute extremely large areas with salt.

The electrical propulsion and control unit of the vessel is formed by main azipod propulsion units (3) which also perform rudder functions, the bow thruster (9) for manoeuvring and dynamic positioning of the platform powered by the power generation plant.

In working manoeuvres, as a vessel (15) for desalination and drinking-water treatment, the vessel deploys the salt water suction hose or tube (4) of variable length. Seawater can thus be drawn up from a likewise variable depth, depending on physical, chemical, and biological characteristics. Since this water intake is filled with salt water as soon as it is submerged, the suction height of the water is, through the effect of communicating vessels, only from the surface of the sea, i.e., the freeboard of the vessel, requiring less electrical energy for suction coming from the generating means.

It is known that as the depth at sea increases, the water temperature decreases, more or less conditioned by selected geographical area and the time of year during which work is being conducted. Therefore, a first step involves probing which area is the most suitable for obtaining high-quality desalinated water with minimal electrical energy. For this purpose, the vessel has the instrumentation required for analysing the different water samples water obtained, depending on the area in which it is operating.

Once the operating area is selected and with the propulsion machinery of the vessel in operation, a second step consists of positioning the vessel (15) at the required point by means of the dynamic positioning system; starting up the set of pumps making up the system: the pump for suctioning water at the desired depth; and the pressure pump for driving it to the reverse osmosis plant (2) for desalination; the pump for driving it to the product water storage, as well as the pumps for the brine diffuser conduits for brine with a high salt content, while at the same time performing the necessary analyses of the product water to corroborate the results of the probe phase.

The brine is dumped into the sea at a variable depth or by the deck diffusers (8), such that maximum dilution of salts in the sea is obtained, which involves zero pollution of the sea given the proportion between the amount of brine dumped and the expanse of the sea in the chosen area.

As a power generator (1), this model of vessel (15) requires the use of a power source installed on board, which can consist of any of the following generation systems according to the fuel that is used:
- high-speed marine generation units with diesel fuel;
- marine generation units with gas (LNG, NG, LPG, GLP, CH₄);
- marine generation units with hydrogen (H₂);
- marine generation units with dual-fuel motors;
- marine generation units with gas turbines;
- marine generation units with two-stroke gas motors (NG);
- low-temperature fuel cells, such as proton exchange membrane fuel cells (PEMFC), alkaline fuel cells (AFC), and phosphoric acid fuel cells (PAFC);
- medium-/high-temperature fuel cells, such as molten-polycarbonate fuel cells (MCFC);
- high-temperature fuel cells, such as solid oxide fuel cells (SOFC).

The on-board generation of electrical energy is sufficient for the manoeuvring of the vessel and the supply to all the units and services needed for same. The remaining energy from among that produced and that consumed by the vessel itself is transported to the land-based grid (22) by means of underwater cables (21).

The operating capacity of the vessel varies greatly: it can produce drinking water and electrical energy at the same time, according to the requirement of both products on land in the possible case of natural disasters; it can produce just drinking water as the only product required on land; or it can produce just the electrical energy required for transporting same to land and supplying the power grid or a distribution substation.

This patent has a very important industrial application given that the objectives of producing drinking water suitable for human consumption and generating electrical energy for supplying the land-based grid can be covered with a single vessel.

## Claims

1. A vessel (15) for the desalination/drinking-water treatment, distribution, and transport of desalinated drinking water obtained from seawater collected by a telescopic tube (4), by means of a reverse osmosis plant (2) and drinking-water treatment plant (5) on the same platform, while at the same time producing electrical energy by means of a power generation plant (1), which supplies said electrical energy to all the units and services on the vessel and to land by means of underwater cable (21), **characterised by** the attachment of modular elements for supplying drinking water and power and by comprising:
- vessel (15);
- salt water aspiration and pumping units (4);
- units of refrigeration of the thruster plant;
- reverse osmosis plants (2) for desalination;
- drinking-water treatment plants (5);
- product water (desalinated water) pumping units at the outlet of the reverse osmosis plants to pump said water to the drinking-water treatment plants;
- brine (reject water) pumping units at the outlet of the reverse osmosis plants;
- pipes and brine diffusers (8) in a large sea area;
- desalinated water distillation plant (6);
- storage tanks for the treated drinking water suitable for human consumption (7);
- treated drinking water pumping units for transferring same to land;
- power generating plant, with marine generating plants, fuel cells, or a combination of both systems (1);
- power transformer substations;
- AC inverters; and
- fuel tanks for the power generating plant.

2. The vessel for the desalination/drinking-water treatment of salt water according to claim 1, **characterised by** 400 V - 11 kV/50 Hz or 440V - 11 kV/60 Hz marine power plants of the vessel driven by:
- high-speed diesel motors (n ≥ 1,000 rpm);
- high-speed gas motors (n ≥ 1,000 rpm) (LNG, NG, LPG, GLP, CH₄);
- high-speed motors (n ≥ 1,500 rpm) powered by hydrogen (H₂);
- medium- or high-speed dual-fuel motors (n≥ 500 rpm);
- gas turbines;
- two-stroke gas motors (NG);
- low-temperature fuel cells, such as proton exchange membrane fuel cells (PEMFC), alkaline fuel cells (AFC), and phosphoric acid fuel cells (PAFC);
- medium-/high-temperature fuel cells, such as molten-polycarbonate fuel cells (MCFC); and
- high-temperature fuel cells, such as solid oxide fuel cells (SOFC);
- including electric azipod control and propulsion units (3), electric bow thrusters (9) for manoeuvring, and dynamic positioning system.

3. The vessel for the desalination/drinking-water treatment of salt water according to the preceding claims, **characterised in that** the drinking water is transported from the vessel to land by:
- direct transfer by means of an underwater pipe (17);
- direct transfer by a floating pipe (14);
- towed floating tanks (16); and
- tanker vessels (23).

4. The vessel for the desalination/drinking-water treatment of salt water according to the preceding claims, **characterised in that** electrical energy is supplied from the vessel (15) to land by an underwater cable (21).
